# EUROPÄISCHE PATENTSCHRIFT

(11) **EP 2 390 524 B1**
(45) Veröffentlichungstag und Bekanntmachung des Hinweises auf die Patenterteilung: **19.06.2013**
(21) Anmeldenummer: 11163439.0
(22) Anmeldetag: 21.04.2011
(51) Int. Cl.: F16D 41/08, F16D 43/02, B60N 2/22

(54) **Schaltbare Kupplung**
Switchable coupling
Coupleur embrayable

(30) Priorität: 25.05.2010 DE 102010021408
(43) Veröffentlichungstag der Anmeldung: 30.11.2011
(73) Patentinhaber: Schaeffler Technologies AG & Co. KG, 91074 Herzogenaurach (DE)
(72) Erfinder: Hochmuth, Harald, 91469 Hagenbüchach (DE); Plachert, Uwe, 91466 Gerhardshofen (DE)

(56) Entgegenhaltungen:
- WO-A1-96/20352
- DE-A1-102005 030 719
- DE-A1-102005 061 791
- DE-C1- 19 549 548
- US-A1- 2005 006 193

## Beschreibung

### Gebiet der Erfindung

Die Erfindung betrifft eine schaltbare Kupplung mit einem Freilauf, einem eine Klemmfläche aufweisenden Gehäuse, einem gegenüber dem Gehäuse drehbaren Antriebselement, einem gegenüber dem Gehäuse drehbaren Abtriebselement, mit an dem Abtriebselement vorgesehenen, der Klemmfläche zugewandten Klemmrampen, mehreren Klemmrollen, die zwischen der Klemmfläche und den Klemmrampen angeordnet sind, ein mit dem Antriebselement verbundener, in dem Gehäuse entlang einer Laufbahn bewegbarer Stellring, der Anlageflächen für die Klemmrollen aufweist.

### Hintergrund der Erfindung

Eine gattungsgemäße schaltbare Kupplung ist aus der DE 195 49 548 C1 oder DE 10 2005 030 719 A1 bekannt. Derartige schaltbare Kupplungen, die auch als Klemmgesprerre bezeichnet werden, werden unter anderem bei Sitzhöhenverstellungen von Kraftfahrzeugen eingesetzt. Ein Gehäuse weist eine zylindrische Ausnehmung auf, deren Zylinderwand eine Klemmbahn bildet. Koaxial zu der zylindrischen Ausnehmung ist ein Abtriebselement vorgesehen, das an seiner der Klemmbahn zugewandten Mantelfläche mit mehreren über den Umfang verteilt angeordneten Klemmrampen versehen ist. Zwischen den Klemmrampen und der Klemmbahn sind Klemmrollen gefedert angeordnet, wobei die Klemmrollen zwischen der Klemmfläche und dem mit dem Antriebselement verbundenen Stellring einklemmbar sind. Das in das Abtriebselement eingeleitete Lastelement kann durch die auf einen besetzen Sitz wirkende Gewichtskraft erzeugt werden. Bei unbelastetem Sitz überträgt das Halteelement das von einem Federelement ausgeübte Lastmoment. Das Abtriebselement ist als Welle ausgebildet, die sich in Klemmstellung gegenüber dem Gehäuse nicht drehen kann, weil in beiden Drehrichtungen die Klemmrollen in die Zwischenräume zwischen Klemmfläche und Klemmrampen einrollen und eine Klemmverbindung zwischen Gehäuse und Welle aufrechterhalten. Nach dem Lösen der Klemmverbindung dient das Lastmoment der Verstellung der Sitzhöhe.

Obwohl sich derartige schaltbare Kupplungen mit einem Freilauf seit vielen Jahren bewährt haben, wurde in einzelnen Fällen beobachtet, dass bei der Betätigung ratternde Geräusche auftreten, insbesondere wurde der Stick-Slip-Effekt bzw. Haftgleiteffekt beobachtet. Bei der Relativbewegung von zueinander bewegten Körpern treten Haftreibung und Gleitreibung abwechselnd auf, einhergehend mit unerwünschten Rattergeräuschen. Die in der DE 195 49 548 C1 vorgeschlagene Reibscheibe, die in der Praxis aus Kunststoff hergestellt wurde, verhindert zwar den Stick-Slip-Effekt, nachteilig sind allerdings die beobachteten Streuungen der Reibmomente, zudem ist das Reibverhalten temperaturabhängig. Bei höheren Temperaturen und nach längerer Betriebsdauer können Relaxiationserscheinungen auftreten, die Stick-Slip begünstigen.

### Zusammenfassung der Erfindung

Der Erfindung liegt daher die Aufgabe zugrunde, eine schaltbare Kupplung anzugeben, die eine ruckfreie Verstellung ermöglicht.

Zur Lösung dieser Aufgabe ist bei einer schaltbaren Kupplung der eingangs genannten Art erfindungsgemäß vorgesehen, dass die schaltbare Kupplung eine auf den Stellring einwirkende Reibbremse aufweist, die als auf den Stellring einwirkender offener Reibring ausgebildet ist, der axial zwischen dem Stellring und dem Gehäuse abgestützt ist.

Durch die erfindungsgemäß vorgesehene Reibbremse wird eine unerwünschte Verstellung des Stellrings vermieden, der Stellring wird in der gestellten Position gehalten. Die Reibbremse bewirkt, dass der Stellring nach dem Schaltvorgang weiterhin an den Klemmrollen anliegt, wodurch Stick-Slip vermieden wird. Da bei einem nachfolgenden Schaltvorgang nicht erst zunächst ein Leerweg überwunden werden muss, wird dem Benutzer der Eindruck einer verlustfrei arbeitenden Verstelleinrichtung vermittelt.

Die besonders zuverlässige Wirkung ergibt sich, weil die Reibbremse bei der erfindungsgemäßen schaltbaren Kupplung als auf den Stellring einwirkender offener Reibring ausgebildet ist, der axial zwischen dem Stellring und dem Gehäuse abgestützt ist. Auf diese Weise kann der Stellring, der federnd durch den Reibring beaufschlagt wird, an einer genau definierten axialen Position gehalten werden.

Gemäß einer weiteren, besonders bevorzugten Ausgestaltung der erfindungsgemäßen schaltbaren Kupplung kann der Reibring axial zum Stellring gebogene Endabschnitte aufweisen. Die zum Stellring gerichteten Endabschnitte wirken federelastisch, sodass sie bei der Montage entgegen der Biegung teilweise oder ganz flachgedrückt werden, wodurch eine Vorspannung entsteht. Die elastisch gegen ihre Biegung verformten Endabschnitte des Reibrings stützen sich an dem Stellring ab, darüber hinaus stützt sich der Reibring an dem Gehäuse ab.

Eine ruckfreie Verstellung der erfindungsgemäßen schaltbaren Kupplung ist insbesondere dann sichergestellt, wenn die Endabschnitte des Reibrings im montierten Zustand spielfrei an Mitnehmernasen des Stellrings anliegen. Bei einer erneuten Betätigung der schaltbaren Kupplung, also bei einer weiteren Drehung des Stellrings, erfolgt unmittelbar eine Drehung des Abtriebselements, ohne dass zuvor ein Leerweg überwunden werden muss. Dabei ist es besonders günstig, dass durch die spielfreie Anordnung des Reibrings gegebenenfalls vorhandene Toleranzen überbrückt werden können.

Damit die Funktion der erfindungsgemäßen schaltbaren Kupplung auch bei schwankenden Temperaturen sichergestellt ist, wird es bevorzugt, dass der Reibring aus Stahl besteht, insbesondere kann er aus Federstahl bestehen.

### Kurze Beschreibung der Zeichnung

Die Erfindung wird nachfolgend anhand eines Ausführungsbeispiels unter Bezugnahme auf die Zeichnungen erläutert. Die Zeichnungen sind schematische Darstellungen und zeigen:
- Fig. 1: einen Ausschnitt einer erfindungsgemäßen schaltbaren Kupplung im Bereich des Reibrings vor der Montage; und
- Fig. 2: den in Fig. 1 gezeigten Ausschnitt einer erfindungsgemäßen schaltbaren Kupplung nach der Montage.

### Ausführliche Beschreibung der Zeichnung

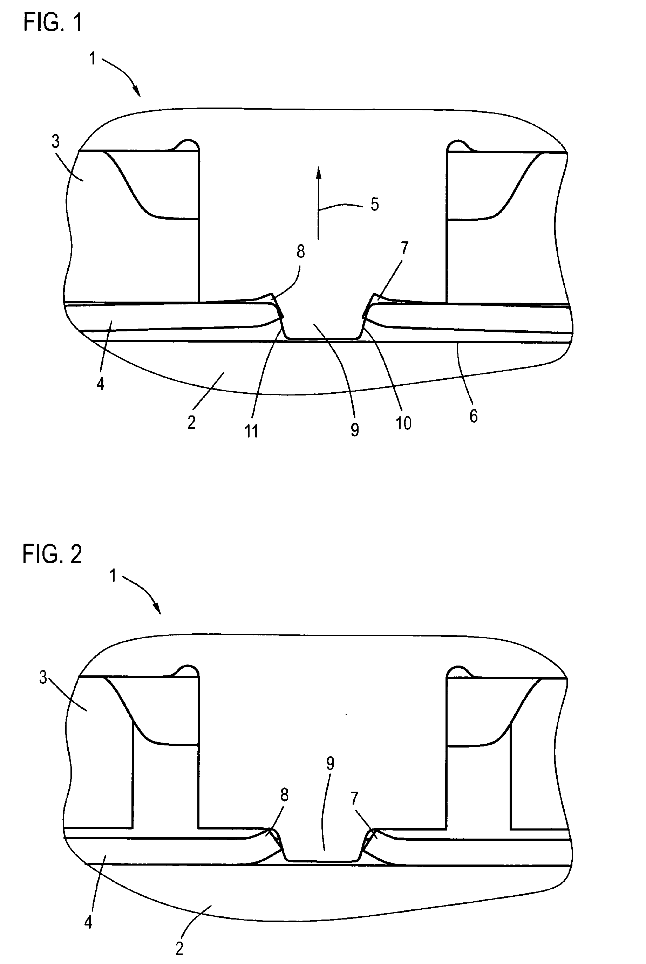

Die in den Fig. 1 und 2 lediglich ausschnittsweise gezeigte schaltbare Kupplung 1 ist Bestandteil einer Sitzhöhenverstellung für ein Kraftfahrzeug. Die schaltbare Kupplung 1 umfasst ein Gehäuse 2, das an seiner Innenseite eine Klemmfläche aufweist. Klemmrollen sind zwischen der Klemmfläche und einem als Innenstern ausgebildeten Ritzel angeordnet, das als Abtriebselement dient. Die Klemmrollen werden durch Federn beaufschlagt und sind gegen Anlageflächen eines Stellrings 3 angefedert.

Die schaltbare Kupplung 1 weist eine als Reibring 4 ausgebildete Reibbremse auf, die auf den Stellring 3 einwirkt. Der Reibring 4 ist als offener Ring ausgebildet und stützt sich in der durch den Pfeil 5 gekennzeichneten Axialrichtung einerseits an dem Stellring 3 und andererseits an einer Innenfläche 6 des Gehäuses 2 ab.

Auf eine ausführliche Darstellung des Aufbaus und der Wirkungsweise einer schaltbaren Kupplung wird an dieser Stelle verzichtet, diesbezüglich wird auf die bereits erwähnte DE 195 49 548 C1 verwiesen.

Fig. 1 zeigt den Reibring 4 und den Stellring 3 vor der Montage, wobei Stellring 3 und Reibring 4 zum besseren Verständnis übereinander gezeichnet sind. Wie in Fig. 1 zu sehen ist, weist der Reibring 4, der als offener Reibring ausgebildet ist, axial gebogene Endabschnitte 7, 8 auf, wobei die abgebogenen Endabschnitte 7, 8 zum Stellring 3 weisen. Der Stellring 3 weist eine axial vorspringende Mitnehmernase 9 auf, an deren Anlageflächen 10, 11 die Endabschnitte 7, 8 des Reibrings 4 im eingebauten Zustand anliegen. Bei einer Drehung des Stellrings 3 wird der Reibring 4 mitgeschleppt, sodass zwischen dem Reibring 4 und einer Innenfläche des Gehäuses 2 Reibung entsteht, die das Auftreten von Stick-Slip verhindert.

Fig. 2 zeigt die schaltbare Kupplung 1 nach der Montage. Während der Montage werden die umgebogenen Endabschnitte 7, 8 des Reibrings 4 elastisch entgegen der Biegung verformt, sodass der Reibring 4 näherungsweise, abgesehen von den Endabschnitten 7, 8, flach gebogen ist. In diesem Zustand übt der Reibring 4, der sich an einer Innenfläche des Gehäuses 2 abstützt, eine axiale Vorspannung auf den Stellring 3 aus.

Wie in Fig. 2 gezeigt ist, liegen die Endabschnitte 7, 8 des Reibrings 4 exakt spielfrei an der Mitnehmernase 9 an. Durch die spielfreie Positionierung des Stellrings 3 werden Toleranzen überbrückt, sodass die schaltbare Kupplung 1 spielfrei arbeitet. Die axiale Verbiegung bzw. Vorpfeilung der Endabschnitte 7, 8 ist größer als die axiale Höhe der Mitnehmernase 9 des Stellrings 3.

### Bezugszahlenliste

| | |
|---|---|
| 1 | Kupplung |
| 2 | Gehäuse |
| 3 | Stellring |
| 4 | Reibring |
| 5 | Pfeil |
| 6 | Innenfläche |
| 7 | Endabschnitt |
| 8 | Endabschnitt |
| 9 | Mitnehmernase |
| 10 | Anlagefläche |
| 11 | Anlagefläche |

## Patentansprüche

1. Schaltbare Kupplung (1) mit
einem Freilauf,
einem eine Klemmfläche aufweisenden Gehäuse (2),
einem gegenüber dem Gehäuse drehbaren Antriebselement,
einem gegenüber dem Gehäuse drehbaren Abtriebselement,
mit an dem Abtriebselement vorgesehenen, der Klemmfläche zugewandten Klemmrampen,
mehreren Klemmrollen, die zwischen der Klemmfläche und den Klemmrampen angeordnet sind,
einem mit dem Antriebselement verbundenen, in dem Gehäuse entlang einer Laufbahn bewegbaren Stellring (3), der Anlageflächen für die Klemmrollen aufweist, **dadurch gekennzeichnet, dass** die schaltbare Kupplung (1) eine auf den Stellring (3) einwirkende Reibbremse aufweist, die als auf den Stellring (3) einwirkender offener Reibring (4) ausgebildet ist, der axial zwischen dem Stellring (3) und dem Gehäuse (2) abgestützt ist.

2. Schaltbare Kupplung nach Anspruch 2, **dadurch gekennzeichnet, dass** der Reibring (4) axial zum Stellring (3) gebogene Endabschnitte (7, 8) aufweist.

3. Schaltbare Kupplung nach Anspruch 3, **dadurch gekennzeichnet, dass** die Endabschnitte (7, 8) des Reibrings (4) im montierten Zustand spielfrei an einer Mitnehmernase (9) des Stellrings (3) anliegen.

4. Schaltbare Kupplung nach Anspruch 4, **dadurch gekennzeichnet, dass** die axiale Verbiegung der freien Endabschnitte (7, 8) des Reibrings (4) größer ist als die axiale Höhe der Mitnehmernase (9).

5. Schaltbare Kupplung nach einem der Ansprüche 2 bis 5, **dadurch gekennzeichnet, dass** der Reibring (4) aus Stahl besteht, insbesondere aus Federstahl.

## Claims

1. Switchable coupling (1), with
a freewheel,
a housing (2) having a clamping face,
a drive element rotatable with respect to the housing,
a driven element rotatable with respect to the housing, with clamping ramps provided on the driven element and confronting the clamping face,
a plurality of clamping rollers which are arranged between the clamping face and the clamping ramps,
an actuating ring (3) which is connected to the drive element and is movable in the housing along a running track and which has bearing faces for the clamping rollers, **characterized in that** the switchable coupling (1) has a friction brake which acts upon the actuating ring (3) and which is designed as an open friction ring (4) which acts upon the actuating ring (3) and which is supported axially between the actuating ring (3) and the housing (2).

2. Switchable coupling according to Claim 2, **characterized in that** the friction ring (4) has end portions (7, 8) bent axially with respect to the actuating ring (3).

3. Switchable coupling according to Claim 3, **characterized in that** the end portions (7, 8) of the friction ring (4) bear, in the mounted state, against a dog nose (9) of the actuating ring (3) in a play=free manner.

4. Switchable coupling according to Claim 4, **characterized in that** the axial bend of the free end portions (7, 8) of the friction ring (4) is greater than the axial height of the dog nose (9).

5. Switchable coupling according to one of Claims 2 to 5, **characterized in that** the friction ring (4) consists of steel, in particular of spring steel.

## Revendications

1. Embrayage commutable (1), comprenant
une roue libre,
un boîtier (2) comprenant une surface de serrage,
un élément d'entraînement rotatif par rapport au boîtier,
un élément de sortie rotatif par rapport au boîtier,
comprenant des rampes de serrage prévues sur l'élément de sortie et tournées vers la surface de serrage,
plusieurs rouleaux de serrage qui sont disposés entre la surface de serrage et les rampes de serrage,
une bague de réglage (3) reliée à l'élément d'entraînement et mobile dans le boîtier le long d'une voie de roulement, laquelle bague de réglage comprend des surfaces d'appui pour les rouleaux de serrage, **caractérisé en ce que** l'embrayage commutable (1) comprend un frein à friction agissant sur la bague de réglage (3), lequel frein à friction est réalisé sous forme de bague de friction ouverte (4) agissant sur la bague de réglage (3), laquelle bague de friction est supportée axialement entre la bague de réglage (3) et le boîtier (2).

2. Embrayage commutable selon la revendication 2, **caractérisé en ce que** la bague de friction (4) comprend des sections d'extrémité (7, 8) courbées axialement en direction de la bague de réglage (3).

3. Embrayage commutable selon la revendication 3, **caractérisé en ce que** les sections d'extrémité (7, 8) de la bague de friction (4) s'appliquent sans jeu contre un ergot d'entraînement (9) de la bague de réglage (3) à l'état monté.

4. Embrayage commutable selon la revendication 4, **caractérisé en ce que** l'arcure axiale des sections d'extrémité libres (7, 8) de la bague de friction (4) est plus grande que la hauteur axiale de l'ergot d'entraînement (9).

5. Embrayage commutable selon l'une quelconque des revendications 2 à 5, **caractérisé en ce que** la bague de friction (4) est constituée d'acier, en particulier d'acier à ressorts.
